# FASCICULE DE BREVET EUROPEEN

(11) **EP 0 525 583 B1**
(45) Date de publication et mention de la délivrance du brevet: **24.04.1996**
(21) Numéro de dépôt: 92112422.8
(22) Date de dépôt: 21.07.1992
(51) Int. Cl.: H02G 15/25, H02G 15/24

(54) **Ensemble de raccordement de deux câbles haute ou très haute tension**
Anordnung zum Verbinden zweier Kabel für hohe oder sehr hohe Spannung
High or very high voltage cable junction assembly

(30) Priorité: 24.07.1991 FR 9109352
(43) Date de publication de la demande: 03.02.1993
(73) Titulaire: ALCATEL CABLE, F-92111 Clichy Cédex (FR)
(72) Inventeur: Darcy, André, F-62100 Calais (FR)
(74) Mandataire: Weinmiller, Jürgen

(56) Documents cités:
- EP-A- 0 194 898
- DE-U- 7 807 166
- DE-U- 8 903 187
- FR-A- 1 537 302
- GB-A- 295 724
- US-A- 2 650 260

## Description

La présente invention est relative au raccordement de deux câbles haute ou très haute tension d'une ligne souterraine de transport d'énergie. Elle porte plus particulièrement sur le raccordement de tels câbles pouvant être de même nature et en particulier être deux câbles à huile, ou pouvant être de nature différente et en particulier être l'un du type à huile et l'autre à isolation sèche.

Les ensembles de raccordement de tels câbles sont en tant que tels déjà connus. Ils sont utilisés notamment pour éviter des pressions internes excessives d'isolation fluide dans les câbles, lors de dénivellations importantes le long de la ligne de transport d'énergie. Ils assurent alors sur la ligne une cassure entre les deux câbles concernés qu'ils raccordent. Ils sont aussi utilisés pour le raccordement d'un câble à isolant interne fluide et d'un câble à isolant interne solide, par exemple en matériau plastique, en assurant une étanchéité convenable entre eux.

Les ensembles de raccordement, utilisés jusqu'à présent, comportent un isolateur terminal sur chaque câble, des moyens de raccordement des extrémités des conducteurs dénudés des câbles et un caisson périphérique dit de transistion, de dimensions très nettement supérieures à celles des moyens de raccordement.

Les moyens de raccordement peuvent comporter un connecteur ou tige de raccordement équipée à ses extrémités de deux douilles multicontact pour l'un et l'autre des conducteurs des câbles. Chaque douille reçoit l'extrémité du conducteur dénudé de l'un des câbles, cette extrémité du conducteur dénudé affleurant sensiblement sur l'extrémité de l'isolateur en place sur le câble.

Le caisson de transition s'étend largement autour des deux isolateurs terminaux des câbles. Il est fixé de manière étanche sur leurs extrémités arrière. Il est rempli d'isolant gazeux ou fluide, par exemple de SF6 ou d'huile neutre de silicone en légère pression, ou d'huile minérale ou synthétique sous pression, pouvant être de même nature que celle d'isolation de l'un et/ou l'autre des deux câbles. De manière courante, ces caissons ont une longueur allant de 1 à 2m au moins et un diamètre de 0,5 à 1 m au moins, selon les câbles à raccorder.

Le document FR-A-1 537 302 décrit un ensemble de raccordement de ce type, dont le caisson périphérique est formé par une enveloppe cylindrique et deux plaques annulaires de fermeture étanche des extrémités de l'enveloppe sur les extrémités arrière des deux isolateurs sur les deux câbles.

Dans cet ensemble connu, l'enveloppe cylindrique peut être montée initialement sur l'un des câbles et est coulissée en place sur les câbles équipés de leur isolateur terminal et raccordés. En variante, l'enveloppe cylindrique peut être fixe et alors installée à son emplacement de pose, après dégagement des parties terminales des câbles de cet emplacement. Dans cette variante, les parties terminales des câbles équipées de leur isolateur terminal sont introduites dans l'enveloppe, par les extrémités de celle-ci, et les extrémités de l'enveloppe sont alors fermées sur les isolateurs. Cette enveloppe fixe comporte une fenêtre d'accès, qui permet de réaliser le raccordement des deux câbles à l'intérieur de l'enveloppe et qui est ensuite elle-même fermée au moyen d'un couvercle approprié.

La pose d'un tel ensemble de raccordement est délicate et longue. En particulier, lorsque l'enveloppe est coulissante sur l'un des câbles, il est nécessaire de prévoir un dégagement important le long et autour de celui-ci, pour monter cette enveloppe suffisamment loin sur ce câble et permettre la mise en place de l'isolateur sur la partie terminale de ce câble. Par contre, lorsque l'enveloppe est fixe à son emplacement de pose, les manipulations des câbles et particulièrement l'opération d'insertion des câbles dans l'enveloppe puis l'opération de raccordement électrique des câbles avec leur alignement requis dans les douilles devant les recevoir sont difficiles à effectuer et peuvent conduire à des détériorations de parties de l'ensemble de raccordement, nécessitant alors son remplacement par un nouvel ensemble.

La présente invention a pour but notamment de faciliter les opérations de pose et de réduire leur durée.

Elle a pour objet un ensemble de raccordement de deux câbles haute ou très haute tension, comportant un isolateur terminal sur chacun desdits câbles, en bout duquel affleure l'extrémité du conducteur dénudé du câble, des moyens de raccordement raccordant les extrémités des deux conducteurs dénudés affleurant en bout des isolateurs, des moyens d'isolation entourant lesdits moyens de raccordement et un caisson étanche de transition, ledit caisson comportant une enveloppe sensiblement cylindrique entourant lesdits moyens d'isolation et au moins les portions terminales en regard l'une de l'autre des isolateurs et des moyens de fixation des extrémités de ladite enveloppe sur les isolateurs, caractérisé en ce que ladite enveloppe comprend trois pièces cylindriques distinctes et assemblables, dont deux d'entre elles sont opposées et non jointives l'une à l'autre sur la longueur de ladite enveloppe, sont fixées sur l'un et l'autre des isolateurs, respectivement, et sont dites pièces fixes d'extrémité de ladite enveloppe et la troisième est coulissante sur une première desdites pièces d'extrémité, entre une position de fermeture longitudinale de ladite enveloppe et une position d'ouverture centrale dudit caisson, et est dite pièce centrale mobile de ladite enveloppe.

Cet ensemble présente en outre au moins l'un ou l'autre des particularités suivantes :
- chacune des pièces d'extrémité et centrale est équipée de brides fixes à ses extrémités, pour leur fixation sur les isolateurs et entre elles, et la deuxième pièce d'extrémité porte en outre une bride tournante associée à sa bride fixe pour sa fixation à celle de ladite pièce centrale,
- chacun des isolateurs est prémonté en usine dans chacune des pièces d'extrémité,
- il comporte en outre un déflecteur de champ monté autour des moyens de raccordement, entre les isolateurs terminaux des deux câbles,
- le déflecteur de champ est entouré d'un isolant solide, en particulier de papier imprégné d'huile, en une ou plusieurs couches superposées,
- l'isolant solide baigne dans un isolant fluide ou gazeux remplissant le caisson, et en particulier dans de l'huile de même nature que celle d'isolation interne d'au moins l'un des câbles,
- l'huile remplissant le caisson assure une régulation de pression interne d'huile dans le ou les câbles concernés.

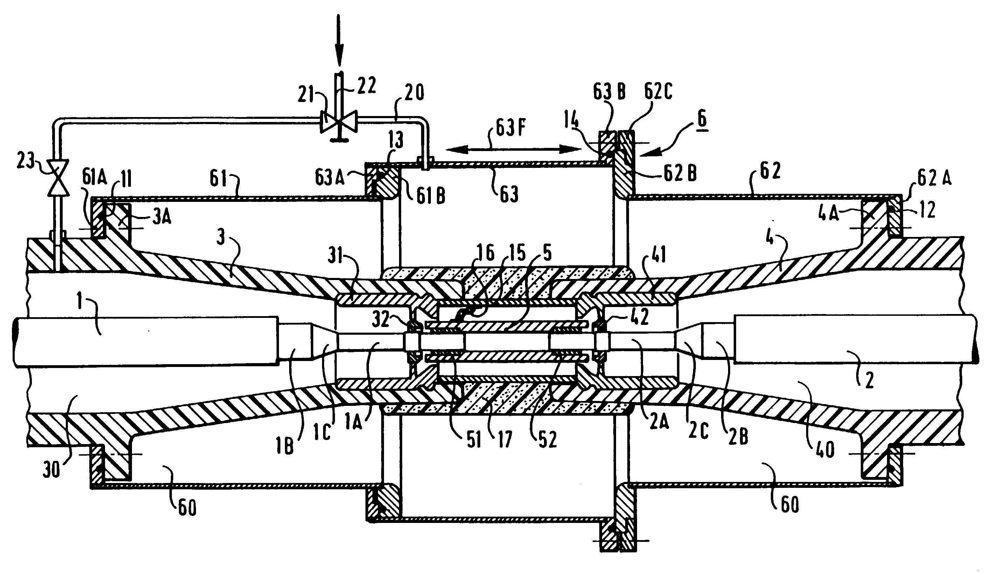

Les caractéristiques et avantages de la présente invention ressortiront de la description détaillée faite ci-après d'un exemple de réalisation illustré dans la figure unique du dessin ci-annexé.

Cette figure unique illustre en coupe diamétrale partielle un ensemble de raccordement, selon l'invention.

Elle montre deux câbles 1 et 2 haute ou très haute tension d'une ligne souterraine de transport d'énergie raccordés dans cet ensemble. Le câble 1 est par exemple un câble à huile, dont l'isolation est assurée par du papier imprégné d'huile maintenue sous pression. Le câble 2 peut être analogue au câble 1 ou est un câble à isolation sèche assurée par une couche de plastique.

Ces câbles sont l'un et l'autre à gaine externe d'étanchéité et de retour de masse, en plomb, éventuellement recouverte d'une gaine PVC. On a désigné leur conducteur sous la référence 1A ou 2A leur gaine en plomb sous la référence 1B ou 2B et leur isolation interne sous la référence 1C ou 2C, selon le câble considéré.

A l'extrémité de chacun des deux câbles, les conducteurs 1A et 2A sont dénudés pour leur raccordement.

L'ensemble de raccordement comporte un isolateur 3, 4 entourant la partie terminale de chaque câble, en bout duquel affleure le conducteur dénudé 1A, 2A, une tige de raccordement 5 équipée d'une douille multicontact 51, 52 à l'une et l'autre de ses deux extrémités pour recevoir le conducteur dénudé de chaque câble, et un caisson métallique dit de transition 6 entourant au moins les portions terminales en regard des deux isolateurs 3 et 4 et la tige de raccordement 5.

Ce caisson 6 est cylindrique et de dimensions très nettement supérieures à celles de la tige de raccordement 5. Il est fixé de manière étanche par ses extrémités sur des épaulements 3A et 4A des deux isolateurs 3 et 4.

Selon la présente invention, le caisson de transition 6 est réalisé en trois parties cylindriques distinctes 61, 62 et 63. Deux d'entre elles sont sensiblement identiques l'une à l'autre et constituent les pièces d'extrémité 61 et 62. La troisième constitue la pièce centrale 63. Cette pièce centrale 63 est coulissante sur l'une des pièces d'extrémité, dans l'exemple illustré sur la pièce d'extrémité 61. Ces pièces sont assemblables de manière étanche les unes aux autres et sur les isolateurs, comme illustré et précisé ci-après. La flèche double 63F indique que la pièce 63 est coulissante sur la pièce 61, pour maintenir le caisson ouvert pendant le raccordement des deux câbles et le fermer lorsque le raccordement est effectué.

Chacune des pièces d'extrémité 61 et 62 présente à ses deux extrémités une bride fixe dite arrière 61A, 62A, saillante vers l'intérieur de la pièce, pour sa fixation contre l'épaulement 3A, 4A de l'isolateur 3, 4 concerné, et une autre bride fixe dite avant 61B, 62B, saillante vers l'extérieur de la pièce pour la fixation de la pièce centrale 63. Cette pièce centrale 63 a elle-même à ses extrémités une bride fixe arrière 63A saillante vers l'intérieur, de fixation contre la bride fixe avant 61B de la pièce 61, et une bride fixe avant 63B saillante vers l'extérieur.

Les fixations des brides arrière 61A, 62A sur les épaulements 3A, 4A des isolateurs et de la bride fixe avant 61B sur la bride fixe arrière 63A sont assurées directement par des vis de blocage, illustrées simplement par des traits d'axe, pour celles visibles, mais non référencées. La fixation des brides fixes avant 63B et 62B de la pièce centrale 63 et de la pièce d'extrémité 62 est faite quant à elle avec une bride supplémentaire 62C, montée rotative sur la bride avant 62B de la pièce 62, et par des vis de blocage, également illustrées par des traits d'axe mais non référencées, engagées dans la bride fixe 63B et celle mobile 62C convenablement positionnnée par rotation. Ces deux brides 63B et 62C enserrent ainsi entre elles la bride avant 62B, les faces de contact de ces trois brides étant convenablement épaulées pour un encastrement partiel.

Des joints d'étanchéité 11, 12, 13, 14 assurent l'étanchéité des pièces du caisson au niveau de leurs fixations aux isolateurs et entre elles.

Pour le raccordement des deux câbles 1 et 2 par cet ensemble de raccordement, chaque isolateur 3 et 4 est équipé d'une bague interne terminale 31, 41, fixée dans l'isolateur. Le conducteur dénudé traverse cette bague par une traversée étanche 32, 42 dans laquelle il est bloqué, l'extrémité du conducteur étant légèrement saillante sur le bout de la bague et aisément accessible dans le bout de l'isolateur qui l'entoure. Cette bague est conductrice et associée de manière connue à des moyens internes déflecteurs de tension, montés sur le conducteur dénudé, qui évitent des effets de pointes à l'extrémité du conducteur. La tige de raccordement 5 vient s'engager, entre les deux isolateurs se présentant tête bèche en regard l'un de l'autre, dans le bout de chacune des deux bagues 31 et 41.

Dans cet ensemble de raccordement, un manchon conducteur 15 constituant un déflecteur de champ est monté autour de la tige de raccordement 5, entre les extrémités des deux bagues 31, 41 des isolateurs 3 et 4. Une tresse conductrice 16 relie ce manchon à la tige,pour sa mise au même potentiel. Une isolation 17 entoure le manchon 15 et déborde de part et d'autre sur les extrémités des isolateurs 3 et 4. Elle est réalisée par exemple par un ruban de papier imprégné d'huile enroulé en couches successives. Elle assure la continuité d'isolation entre les deux isolateurs autour des conducteurs raccordés.

De manière connue, les deux isolateurs ont leur extrémité arrière, non visible dans cette figure, fermée de manière étanche sur leur câble. Leur volume intérieur 30 ou 40 forme un volume ambiant isolant autour de la portion terminale du câble et de son conducteur dénudé. Le volume intérieur 60 du caisson 6 forme également un volume ambiant isolant autour des portions terminales des isolateurs et de l'isolation reconstituée 17 entre eux. En particulier le volume intérieur 30 de l'isolateur 3 est sous pression d'huile, de même nature que celle d'isolation du conducteur du câble 1, le volume intérieur 40 est par exemple sous pression de SF6, ou sous légère pression d'huile neutre. Le volume intérieur 60 du caisson est de préférence quant à lui sous pression d'huile de même nature que celle remplissant l'isolateur 3 et le câble 1.

Avantageusement, une canalisation extérieure 20 débouchant dans le caisson 6 et équipée d'une première vanne 21 permet le remplissage de son volume intérieur 60 d'huile, à une pression voulue à partir d'une alimentation 22 raccordée à cette vanne. Cette même canalisation 20 débouche également dans l'isolateur 3 et est équipée d'une deuxième vanne 23, pour permettre l'addition d'huile dans le volume intérieur 30 de cet isolateur et l'obtention d'une pression souhaitée d'huile dans cet isolateur et dans le câble 1, en particulier à partir du volume intérieur 60 du caisson.

Les avantages de l'ensemble de raccordement selon la présente invention ressortent directement de la description ci-avant de l'exemple de réalisation illustré. En particulier :
- la fixation des deux isolateurs se fait séparément sur les deux pièces d'extrémité du caisson, ces isolateurs étant eux-mêmes de préférence prémontés sur les deux pièces d'extrémité en usine pour ne laisser à réaliser sur le chantier que le montage de chaque câble dans son isolateur déjà prémonté dans la pièce d'extrémité,
- le raccordement des deux conducteurs et en particulier du second conducteur dans sa douille de la tige de raccordement déjà raccordée au premier, se trouve considérablement facilité par le simple retrait limité nécessaire du second câble, uniquement sur la longueur de la douille, de l'ordre de 40 à 60 mm environ, et non sur la longueur totale du caisson, et par l'alignement aisé tête-bèche des deux isolateurs terminaux des câbles du fait des deux pièces d'extrémité restant indépendantes l'une de l'autre pendant ce raccordement,
- les risques de détoriarition en cours de montage se trouvent très limités,
- les isolateurs sont protégés par les pièces d'extrémité, ceci pour le transport des isolateurs et pour les opérations, rendues réduites, de montage du caisson en place sur le chantier,
- l'emplacement requis pour ce raccordement est réduit,
- l'accès entre les pièces d'extrémité rend aisés le montage du manchon déflecteur de champ, réalisé avec le raccordement du second conducteur, et la reconstitution de l'isolation autour de ce manchon et sur les extrémités des deux isolateurs, quelle que soit le type d'isolation réalisée.

On note également que les opérations de manipulation sont rendues plus faciles du fait de l'encombrement et du poids moindres de ses différentes pièces individuelles. En outre un tel ensemble de raccordement avec les isolateurs prémontés sur les pièces d'extrémité permet de réaliser des essais en usine, indépendamment des câbles à raccorder, par simple adaptation d'une calotte de fermeture sur chaque pièce d'extrémité du caisson.

## Revendications

1. Ensemble de raccordement de deux câbles haute ou très haute tension, comportant un isolateur terminal (3, 4) sur chacun desdits câbles (1, 2), en bout duquel affleure l'extrémité du conducteur dénudé (1A, 2A) du câble, des moyens de raccordement (5) raccordant les extrémités des deux conducteurs dénudés affleurant en bout des isolateurs, des moyens d'isolation (17) entourant lesdits moyens de raccordement et un caisson étanche de transition, ledit caisson comportant une enveloppe (6) sensiblement cylindrique entourant lesdits moyens d'isolation et au moins les portions terminales en regard l'une de l'autre des isolateurs et des moyens de fixation (61A, 62A) des extrémités de ladite enveloppe sur les isolateurs, caractérisé en ce que ladite enveloppe (6) comprend trois pièces cylindriques distinctes et assemblables (61, 62, 63), dont deux d'entre elles (61, 62) sont opposées et non jointives l'une à l'autre sur la longueur de ladite enveloppe, sont fixées sur l'un et l'autre des isolateurs, respectivement, et sont dites pièces fixes d'extrémité de ladite enveloppe et la troisième (63) est coulissante sur une première desdites pièces d'extrémité, entre une position de fermeture longitudinale de ladite enveloppe et une position d'ouverture centrale dudit caisson, et est dite pièce centrale mobile de ladite enveloppe.

2. Ensemble selon la revendication 1, caractérisé en ce que chacune desdites pièces d'extrémité (61, 62) et centrale (63) est équipée de deux brides fixes terminales, dites bride fixe arrière (61A, 62A, 63A) et bride fixe avant (61B, 62B, 63B) respectivement, constituant, avec des joints d'étanchéité associés (11-14), d'une part directement lesdits moyens de fixation desdites pièces d'extrémité sur lesdits isolateurs (3, 4) et d'autre part des moyens de liaison étanche de la pièce centrale (63) auxdites pièces d'extrémité (61, 62).

3. Ensemble selon la revendication 2, caractérisé en ce qu'il comporte en outre une bride tournante (62C) associée à la bride fixe avant (62B) de la deuxième desdites pièces d'extrémité, pour le blocage de la bride fixe avant de ladite deuxième pièce d'extrémité, entre elle et la bride fixe avant (63B) de ladite pièce centrale (63).

4. Ensemble selon l'une des revendications 1 à 3, caractérisé en ce que chacune desdites pièces d'extrémité (61, 62) et l'un des isolateurs (3, 4) définissent un couple d'éléments pré-assemblés en usine, pour le montage dudit couple d'éléments sur l'un des câbles.

5. Ensemble selon l'une des revendications 1 à 4, caractérisé en ce que qu'il comporte en outre un déflecteur de champ (15) monté autour desdits moyens de raccordement (5), entre lesdits isolateurs (3, 4), et entouré par lesdits moyens d'isolation (17).

6. Ensemble selon la revendication 5, caractérisé en ce que lesdits moyens d'isolation (17) sont constitués en au moins une couche de matière isolante et en particulier par au moins une couche de ruban de papier imprégné d'huile isolante enroulé autour dudit déflecteur de champ (15).

7. Ensemble selon l'une des revendications 1 à 6, caractérisé en ce que le caisson de transition (6) est à isolant remplissant son volume intérieur (60) après fermeture dudit caisson.

8. Ensemble selon la revendication 7, pour au moins l'un des câbles à huile du type sous pression d'isolation interne, caractérisé en ce que le volume intérieur (60) dudit caisson (6) est sous pression d'huile de même nature que celle d'isolation interne d'au moins l'un des câbles et est couplé au volume intérieur de l'isolateur terminal (3) sur ce câble (1).

9. Ensemble selon la revendication 8, caractérisé en ce qu'il comporte une canalisation externe (20) assurant le couplage du volume interne du caisson (6) et de celui de l'isolateur terminal sur chaque câble à huile, équipée de vannes (21, 22) contrôlant leur remplissage sous pression.

## Claims

1. System for jointing two high voltage or very high voltage cables including an insulator (3, 4) fitted to the end of each cable (1, 2) with the end of which the end of the bared conductor (1A, 2A) of the cable is flush, jointing means (5) jointing the ends of the two bared conductors flush at the ends of the insulators, insulator means (17) around said jointing means and a sealed transition box, said box including a substantially cylindrical envelope (6) around said insulator means and at least the facing end portions of both insulators and fixing means (61A, 62A) for fixing the ends of said envelope to the insulators, characterised in that said envelope (6) comprises three separate cylindrical parts (61, 62, 63) adapted to be assembled together, two of which (61, 62) are at opposite ends of the length of said envelope, are not joined together and are fixed to respective insulators, these parts constituting fixed end parts of said envelope, and the third part (63) sliding on a first of said end parts, between a position in which said envelope is longitudinally closed and a position in which said box is open at the centre, this part constituting a mobile central part of said envelope.

2. System according to claim 1 characterised in that each of said end (61, 62) and central (63) parts has a fixed rear flange (61A, 62A, 63A) and a fixed front flange (61B, 62B, 63B) at respective ends constituting with associated seals (11-14) said fixing means for fixing said end parts to said insulators (3, 4) and means for joining and sealing said central part (63) to said end parts (61, 62).

3. System according to claim 2 characterised in that it further comprises a rotatable flange (62C) associated with the fixed front flange (62B) of the second of said end parts to immobilise the fixed front flange of said second end part between it and the fixed front flange (63B) of said central part (63).

4. System according to any one of claims 1 to 3 characterised in that each of said end parts (61, 62) and one of the insulators (3, 4) define a pair of factory-assembled members adapted to be mounted on one of the cables.

5. System according to any one of claims 1 to 4 characterised in that it further includes a field deflector (15) mounted around said jointing means (5) between said insulators (3, 4) and surrounded by said insulator means (17).

6. System according to claim 5 characterised in that said insulator means (17) comprise at least one layer of insulator material and in particular at least one later of insulative oil-impregnated paper tape wrapped around said field deflector (15).

7. System according to any one of claims 1 to 6 characterised in that the interior volumer (60) of the transition box (6) is filled with insulation after said box is closed.

8. System according to claim 7 for use on at least one oil-insulated cable of the pressurised internal insulation type characterised in that the interior volume (60) of said box (6) contains pressurised oil of the same nature as that internally insulating at least one of the cables and is coupled to the interior volume of said insulator (3) fitted to the end of that cable (1).

9. System according to claim 8 characterised in that it includes an external pipe (20) coupling the internal volume of the box (6) and the internal volume of the insulator fitted to the end of each oil-filled cable and fitted with valves (21, 22) controlling their filling under pressure.

## Patentansprüche

1. Einheit zum Anschluß von zwei Kabeln für hohe oder sehr hohe Spannung, mit einem Endisolator (3, 4) auf jedem der Kabel (1, 2), bis zu dessen Ende das Ende des freigelegten Leiters (1A, 2A) dieses Kabels reicht, mit Anschlußmitteln (5) für die Enden der beiden bis zum Ende der Isolatoren reichenden freigelegten Leiter, mit Isoliermitteln (17), die die Anschlußmittel umgeben, und mit einem dichten Übergangskasten, der eine im wesentlichen zylindrische Hülle (6), die die Isoliermittel und zumindest die einander gegenüberliegenden Endbereiche der Isolatoren umgibt, und Mittel (61A, 62A) zur Befestigung der Enden der Hülle auf den Isolatoren aufweist, dadurch gekennzeichnet, daß die Hülle (6) drei unterschiedliche und zusammenbaubare zylindrische Teile (61, 62, 63) aufweist, von denen zwei (61, 62) einander entgegengesetzt und über die Länge der Hülle nicht aneinander angrenzend sind, auf je einem der beiden Isolatoren befestigt sind und ortsfeste Endteile der Hülle genannt werden, während das dritte Teil (63) auf einem der ersten Endteile zwischen einer Stellung des Verschlusses der Hülle in Längsrichtung und einer Stellung der zentralen Öffnung des Kastens gleitet und zentrales und bewegliches Teil der Hülle genannt wird.

2. Einheit nach Anspruch 1, dadurch gekennzeichnet, daß die Endteile (61, 62) und das zentrale Teil (63) je zwei ortsfeste Endflansche, nämlich hintere feste Flansche (61A, 62A, 63A) und vordere feste Flansche (61B, 62B, 63B) aufweisen, die mit zugeordneten Dichtungen (11 bis 14) einerseits direkt die Befestigungsmittel der Endteile auf den Isolatoren (3, 4) und andererseits Mittel zur dichten Verbindung des zentralen Teils (63) mit den Endteilen (61, 62) bilden.

3. Einheit nach Anspruch 2, dadurch gekennzeichnet, daß sie außerdem einen drehendbaren Flansch (62C) aufweist, der dem vorderen festen Flansch (62B) des zweiten Endteils zugeordnet ist, um den vorderen festen Flansch dieses zweiten Endteils zwischen dem drehbaren Flansch und dem vorderen festen Flansch (63B) des zentralen Teils (63) zu blockieren.

4. Einheit nach einem der Ansprüche 1 bis 3, dadurch gekennzeichnet, daß jedes der Endteile (61, 62) und einer der Isolatoren (3, 4) ein Paar von im Werk vormontierten Elementen bilden, die dann auf einem der Kabel montiert werden.

5. Einheit nach einem der Ansprüche 1 bis 4, dadurch gekennzeichnet, daß sie außerdem einen Felddeflektor (15) aufweist, der um die Anschlußmittel (5) herum zwischen den Isolatoren (3, 4) der beiden Kabel montiert und von den Isoliermitteln (17) umgeben ist.

6. Einheit nach Anspruch 5, dadurch gekennzeichnet, daß die Isoliermittel (17) aus mindestens einer Schicht aus isolierendem Material und insbesondere aus mindestens einer Schicht eines mit isolierendem Öl getränkten Papierbands bestehen, das um den Felddeflektor (15) herumgewickelt ist.

7. Einheit nach einem der Ansprüche 1 bis 6, dadurch gekennzeichnet, daß der Übergangskasten (6) ein Isoliermaterial aufweist, das sein Innenvolumen (60) nach dem Schließen des Kastens füllt.

8. Einheit nach Anspruch 7, für mindestens eines der ölkabel, dessen innere Isolierung von Öl unter Druck gebildet wird, dadurch gekennzeichnet, daß das Innenvolumen (60) des Kastens (6) mit Öl gleicher Art wie das Öl der Innenisolierung mindestens eines der Kabel unter Druck gefüllt ist und mit dem Innenvolumen des Endisolators (3) auf diesem Kabel (1) gekoppelt ist.

9. Einheit nach Anspruch 8, dadurch gekennzeichnet, daß sie eine äußere Leitung (20) aufweist, die die Kopplung des Innenvolumens des Kastens (6) und des Volumens des Endisolators auf jedem Ölkabel gewährleistet und mit Ventilen (21, 22) ausgestattet ist, die das Füllen der Volumen unter Druck steuern.
